# EUROPEAN PATENT APPLICATION

(11) **EP 2 403 112 A1**
(43) Date of publication of application: **04.01.2012**
(21) Application number: 10168358.9
(22) Date of filing: 02.07.2010
(51) Int. Cl.: H02K 3/30, H02K 3/34, H02K 3/40

(54) **Stator bar**

(71) Applicant: Alstom Technology Ltd, 5400 Baden (CH)
(72) Inventor: Baumann, Thomas, CH-5430 Wettingen (CH); Rumpf, Werner, CH-5413 Birmenstorf (CH); Hillmer, Thomas, CH-5034 Suhr (CH)

(57) **Abstract**

The stator bar (1) comprises an interwoven conductive element (2) having a main insulation (4) around it. The main insulation (4) comprises two or more layers (5, 6) wrapped one onto the other. An inner layer (5) has a dielectric strength of at least 3 KV/mm and an outer layer (6) has a thermal conductivity of at least 0.5 W/mK. A thickness of the inner layer (5) is equal or lower than one third of the total thickness of the main insulation (3).

## Description

### TECHNICAL FIELD

The present invention relates to a stator bar. In particular the invention refers to a stator bar of a rotating electric machinery such as generators, in particular indirectly cooled generators with more than 100 MW output power and nominal voltage greater 10 kVAC.

### BACKGROUND OF THE INVENTION

Stator bars are known to comprise a conductive element made of a plurality of interwoven strands (green bar or plain Roebel bar) with a main insulation around it.

Important functions of the main insulation are electric insulation and heat transfer.

### ELECTRIC INSULATION

The typical design of a main insulation focuses on the electric aspects and insulation is designed to withstand high electric fields. By far the highest electric field occurs at the corners of the conductive element (i.e. at a position within the insulation, but close to the conductive element). Here it also occurs in the majority of the cases the breakdown at voltage endurance tests. Therefore the main insulation has to be designed to cope with such high fields at the corners, although for the rest of the insulation such high dielectric strength may not be needed.

### HEAT TRANSFER

Heat transfer from the conductor to the stator iron core is also an important function of the insulation, in particular in air-cooled machines. Heat is generated by losses of the high current density and it is removed by transport through the main insulation to the stator iron core.

### INSULATION OF TRADITIONAL STATOR BARS

The main insulation is typically made of a mica tape wrapped around the conductive element and impregnated with a resin.

In particular, DE 198 11 370 discloses to vary the insulation permittivity in the radial direction.

Typical values for the dielectric strength of the main insulation are between 2.5-3.5 kV/mm and, for the thermal conductivity (lambda) between 0.25-0.33 W/mK.

In order to increase the generator power (or reduce the generator dimensions for the same power), the heat transfer properties through the insulation should be increased, to let the insulation dissipate the heat generated in the conductive element during operation, without decreasing the insulation electric properties.

### SUMMARY OF THE INVENTION

The technical aim of the present invention is to provide a stator bar whose insulation has improved heat transfer properties when compared to traditional stator bars.

The technical aim, together with these and further aspects, are attained according to the invention by providing a stator bar in accordance with the accompanying claims.

### BRIEF DESCRIPTION OF THE DRAWINGS

Further characteristics and advantages of the invention will be more apparent from the description of a preferred but non-exclusive embodiment of the stator bar according to the invention, illustrated by way of nonlimiting example in the accompanying drawings, in which:
Figure 1 is a schematic view of a stator bar;
Figure 2 is a particular of a main insulation of the stator bar of figure 1;
Figure 3 shows the run of the electric field (E) at a corner of a stator bar for different corner radii (r) and at the flat sides of the stator bar;
Figure 4 shows a schematic cross section through a tape for manufacturing the insulation, used in a preferred embodiment of the invention; and
Figure 5 shows a corner of a stator bar in a further embodiment of the invention.

### DETAILED DESCRIPTION OF THE INVENTION

The basis of this invention is the finding that most of the breakdowns occurring under high voltage stress occur at the corners. Here the electric field in the area close to the conductive element is enhanced compared to the field at the flat sides.

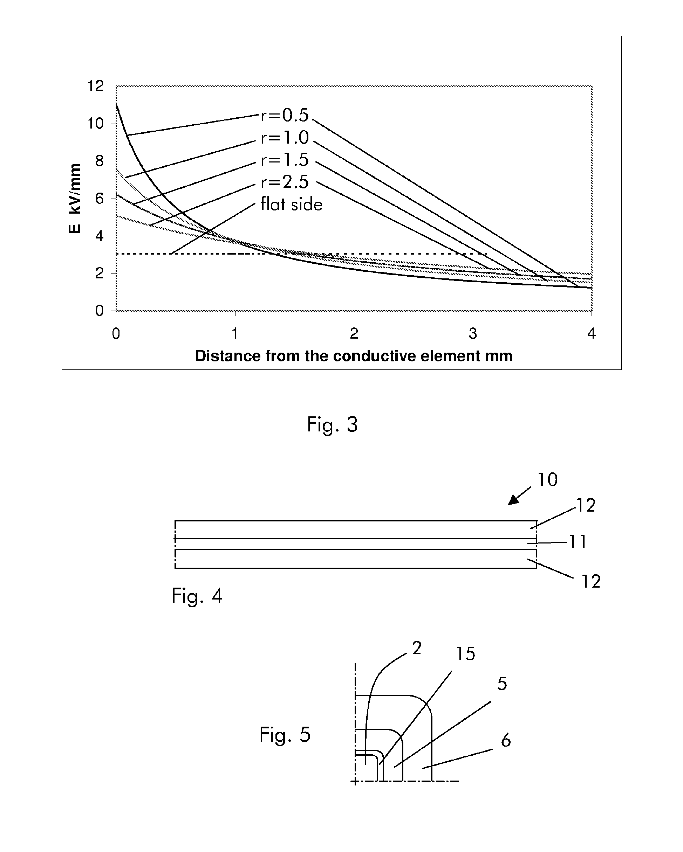

As can be seen from fig. 3 (which shows the electric field E at the corners of a stator bar having corner radius r and at its flat side), the electric field enhancement is restricted to a first zone closest to the conductive element having a thickness about one third of the total thickness of the insulation.

In the rest of the insulation (i.e. a second zone farthest from the conductive element and having a thickness about two thirds of the total thickness of the insulation), the electric field E at the corners is even lower than at the flat sides.

This means that an insulation, which is able to cope with high electric fields is only needed at the first zone of the insulation (i.e. close to the copper of the conductive element).

In the rest of the insulation (the second zone of the insulation), there is no need of an optimisation with respect to the dielectric properties, and an insulation optimized with regard to other physical properties, e.g. thermal conductivity (to increase the heat transfer properties), can be used.

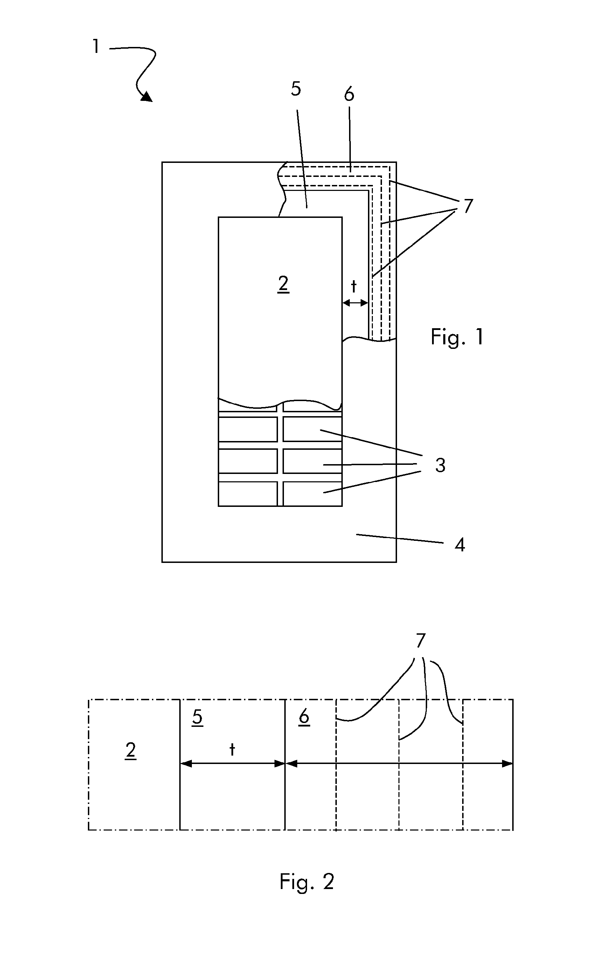

With reference to the figures, the stator bar 1 comprises an interwoven conductive element 2 (green bar or Roebel bar) made of interwoven conductive strands 3 having a main insulation 4 around it (figures 1 and 2).

The main insulation 4 comprises at least two layers 5, 6 wrapped one onto the other.

In particular an inner layer 5 has a dielectric strength of at least 3 KV/mm and the outer layer 6 has a thermal conductivity of at least 0.5 W/mK, preferably 1.0 and more preferably about 1.5 W/mK.

In addition, the thickness t of the inner layer 5 is equal or lower than one third (1/3) of the total thickness of the main insulation 3.

Advantageously, the outer layer 6 includes high thermal conductivity inorganic particles 7 such as Boron Nitrite or corundum with grain size below 0.2 mm.

The electric field is very strong in a zone close to the conductive element 2 but decreases when departing from the conductive element 2, thus the first layer 5 has optimised electric features and the outer layer 6 has optimised thermal features. The thickness of the first layer 5 being not greater than one third (1/3) of the total thickness of the main insulation allows optimised use of the insulating material. In fact after about one third (1/3) of the main insulation thickness, the electric field strength decreases such that focus can be switched on thermal features instead of electric features.

By using such combination of features the gain in thermal transport properties can be increased by 20% due to a reduction in thickness of the entire insulation compared to the use of a high thermal conductivity tape alone and by more than 40% compared the use of a tape with optimized high field stability alone.

In the following some embodiments of the invention are described in detail.

In a first embodiment the inner layer 5 and the outer layer 6 are made of mica tapes having a different HTC particle content (HTC meaning high transport conductivity); these tapes are wrapped around the conductive element 2, are impregnated with a resin and the resin is then cured. For example boron nitride particles can be used as HTC particles.

In particular, the mica tape constituting the inner layer 5 has a low or no HTC particle content and the mica tape of the outer layer 6 has a larger HTC particle content than the inner layer 5.

In the following a second, preferred embodiment of the stator bar is described.

Optimized heat transfer must not be equalled with optimized thermal conductivity. Whilst thermal conductivity is a property of a material, an optimised heat transport from the conductive element 2 to the stator iron core through the insulation 4 requires an optimised heat transport also through the interface between the conductive element 2 and the insulation 4.

For example, in an air cooled generator an air filled gap between the conductive element 2 and the insulation 4 of 0.3 mm in series with a 3 mm insulation would just double the thermal resistance of the insulation 4.

Such gaps can open due to the mismatch in thermal expansion between the conductive element 2 (made of copper) and insulation 4, since under thermal cycling a stress generates at their interface that leads to rupture of the bond, when it exceeds the adhesion force.

For example, typical values for the coefficients of thermal expansions (CTE) are CTE(copper)= 17 ppm/K and CTE (Insulation)= about 10 ppm/K.

In order to reduce the stress at the interface between the conductive element 2 and the insulation 4, the inner layer 5 is manufactured by wrapping a tape 10 made of a mica paper 11 bounded to supporting sheets 12 having equal thermal expansion at each of its sides; preferably the supporting sheets comprise glass and/or organic fibres such as thermoplastic or natural fibres.

The outer layer 6 comprises a mica free tape.

In particular, the outer layer 6 comprises a mica free, glass and/or organic fibre tape (i.e. no mica is contained in this tape).

These tapes are wrapped around the conductive element 2, are impregnated with a resin that is then cured.

In both cases the tape may comprise a woven glass or organic fibre fabric consisting of yarns or rovings or a non-crimp fabric. The glass may consist of any kind of glass fibre and is not limited to E-glass fibres (i.e. to those fibres used as support sheets in mica tapes). In addition, mixed fibres containing thermoplastic fibres, such as Aramide, polyamide, polyester, etc, in combination with glass fibres can also be used. Such mixed fibres may be used to reduce the dielectric permeability of the outer layer and/or adapt the coefficient of thermal expansion CTE.

This inner layer 5 prevents or hinders gaps from forming between the conductive element 2 and the insulation 4, since it has a coefficient of thermal expansion that matches the coefficient of thermal expansion of the copper (constituting the conductive element) within +/- 2 ppm/K; this lets the stress at the interface between the conductive element 2 and the insulation 4 be reduced.

In addition, during operation the mica paper 11 distributes the stress on the two sheets 12 to which it is connected (instead of only one as in traditional mica tapes), further reducing the stress at the interface between the conductive element 2 and the insulation 4.

Thus a greatly reduced stress at the interface between the conductive element 2 and insulation 4, and hence a reduced risk of separation, are achieved.

The outer layer 6 (made of glass and/or organic fibres) has a coefficient of heat transport very high, up to 1.0 W/mK or even larger; preferably it is about 1.5 W/mK.

An additional layer 15 may be placed between the conductive element 2 and the insulation 4 with a coefficient of thermal expansion (CTE) between the one of copper (constituting the conductive element 2) and insulation 4.

This additional layer 15 helps to grade the mechanical stress. Advantageously, the additional layer 15 is made of a weakly conductive material, at least at its inner side, to serve as inner corona protection.

In another preferred embodiment, the additional layer 15 exhibits a plastic or rubber-elastic properties (e.g. it could be a sticky silicon-elastomer or an epoxy-silicon-elastomer-blend); in this embodiment the additional layer 15 absorbs at least part of the shear forces elastically or plastically and, thus, reduces the stress at the interface between the conductive element 2 and the insulation 4. In addition, the additional layer 15 may serve as inner corona protection, if it is made weakly conductive at least at its inner side.

In both cases, when the additional layer 15 has a weakly conductive inner side (i.e. the side towards the same conductive element 2) it has a surface conductivity between 10 Ohm cm/cm< R< 10'000 Ohm cm/cm.

Even combinations of the cited examples are possible and, for example, in a third embodiment of the invention the stator bar may have an inner layer 5 according to the first embodiment above described and an outer layer 6 according to the second embodiment above described.

Manufacturing of the insulation is carried out by wrapping the tapes around the conductive element 2 and then impregnating them.

There is no restriction concerning the way the tapes are impregnated. Both impregnation of dry tapes with resin infusion from outside (e.g. in form of vacuum pressure impregnation technique (VPI) of dry tapes), or the use of resin pre-impregnated tapes (e.g. so called resin rich technology (RR)) is feasible; in addition it is also feasible the use of a combination of dry tapes in one layer and resin pre-impregnated tapes in the other.

In addition, the use of the glass and/or organic fibre tape as the outer layer opens the way to novel production techniques.

It is possible to use mica tapes in combination with pre-impregnated glass tapes and to process them under vacuum and temperature. By proper adjustment of the resin content in the glass the surplus resin serves to impregnate the mica tapes.

Alternatively, a plurality of tapes interleaved with resin films may be used (RFI-technique). This variant facilitates to improve the properties of the outer layer by introducing high thermal conductivity particles. If corundum or Boron Nitride fillers are used, the thermal conductivity will go up, if nano-sized oxides are used the dielectric strength may go up.

Naturally the features described may be independently provided from one another. In practice the materials used and the dimensions can be chosen at will according to requirements and to the state of the art.

### REFERENCE NUMBERS

1 stator bar
2 interwoven conductive element (green bar)
3 strands
4 main insulation
5 inner layer of 3
6 outer layer of 3
7 high thermal conductivity particles
10 tape
11 mica paper
12 supporting sheets
15 additional layer
E electric field
r curvature radii of the stator bar edge
t thickness of 5

## Claims

1. Stator bar (1) comprising an interwoven conductive element (2) having a main insulation (4) around it, wherein the main insulation (4) comprises at least two layers (5, 6) wrapped one onto the other, **characterised in that** an inner layer (5) has a dielectric strength of at least 3 KV/mm and an outer layer (6) has a thermal conductivity of at least 0.5 W/mK, a thickness of the inner layer (5) being equal or lower than one third of the total thickness of the main insulation (3).

2. Stator bar (1) as claimed in claim 1, **characterised in that** the outer layer thermal conductivity is at least 1.0 W/mK and preferably about 1.5 W/mK.

3. Stator bar (1) as claimed in claim 1 or 2, **characterised in that** the outer layer (6) includes high thermal conductivity inorganic particles (7).

4. Stator bar (1) as claimed in claim 3, **characterised in that** the high thermal conductivity inorganic particles (7) comprise Boron Nitrite or Corundum with grain size below 0.2 mm.

5. Stator bar (1) as claimed in claim 1, **characterised in that** the inner layer (5) is manufactured by wrapping around the conductive element (2) a tape comprising a mica paper (11) bounded to supporting sheets (12) at each of its sides, impregnating it with a resin and curing the resin.

6. Stator bar (1) as claimed in claim 1, **characterised in that** the outer layer (6) is manufactured by wrapping around the conductive element (2) a mica free tape.

7. Stator bar (1) as claimed in claim 6, **characterised in that** the mica free tape comprises glass and/or organic fibres.

8. Stator bar (1) as claimed in claims 1, **characterised by** comprising an additional layer (15) between the conductive element (2) and the insulation (4) with a coefficient of thermal expansion between that of the conductive element (2) and that of the insulation (2).

9. Stator bar (1) as claimed in claims 1, **characterised by** comprising an additional layer (15) between the conductive element (2) and the insulation (4) having plastic or rubber-elastic properties.

10. Stator bar (1) as claimed in claims 7 or 8, **characterised in that** said additional layer has a surface conductivity between 10 Ohm cm/cm< R< 10'000 Ohm cm/cm.

11. Tape (10) for manufacturing an insulation of a stator bar, **characterised by** comprising a mica paper (11) bounded to supporting sheets (12) at each of its sides.
